# EUROPÄISCHE PATENTANMELDUNG

(11) **EP 2 865 365 A1**
(43) Veröffentlichungstag der Anmeldung: **29.04.2015**
(21) Anmeldenummer: 13190428.6
(22) Anmeldetag: 28.10.2013
(51) Int. Cl.: A61J 17/00, B29C 65/08

(54) **Schnuller und Verfahren zum Herstellen eines Schnullers**

(71) Anmelder: Lamprecht AG, 8105 Regensdorg (CH)
(72) Erfinder: Nielsen, Michael, 8105 Regensdorf (CH); Scheiber, Patrik, 8155 Niederhasli (CH)
(74) Vertreter: Hepp Wenger Ryffel AG

(57) **Zusammenfassung**

Die Erfindung betrifft einen Schnuller, umfassend einen Schild (10) mit einer ersten Seite (101) und einer zweiten Seite (102), ein Mundstück und eine Nase. Die erste Seite (101) ist in bestimmungsgemässem Gebrauch dem Mund zugewandt. Die Nase und der Schild (10) sind mit einer Ultraschallschweissung miteinander verbunden und wirken derart zusammen, dass das Mundstück zwischen Nase und Schild (10) fixiert, insbesondere festgeklemmt ist. Der Schild (10) weist mindestens eine Kontaktfläche (103) zum Ansetzen einer Ultraschallschweisssonotrode auf. Die Kontaktfläche (103) zum Ansetzen der Ultraschallschweisssonotrode ist auf der ersten Seite (101) des Schildes (10) angeordnet.

## Beschreibung

Die vorliegende Erfindung betrifft einen Schnuller und ein Verfahren zum Herstellen eines Schnullers gemäss den Oberbegriffen der unabhängigen Ansprüche.

Aus dem Stand der Technik sind Schnuller oder Beruhigungssauger bekannt, die aus mehreren Einzelteilen gefertigt werden.

Ein Schnuller umfasst in der Regel einen Schild und ein Mundstück. Der Schild hat eine Mindestgrösse, um beispielsweise ein Kleinkind daran zu hindern, den Schnuller zu verschlucken. In der Regel weist der Schild eine erste und eine zweite Seite auf, wobei die erste Seite dem Mund zugewandt ist und eine konkave Wölbung aufweist, die der Form des Gesichtes beziehungsweise des Mundes des Kleinkindes angepasst sein kann. Auf der dem Mund zugewandten ersten Seite des Schildes ist ein Mundstück angeordnet, welches aus einem weichen und unbedenklichem Material gefertigt ist und zumindest teilweise Ersatz für die Brust bieten soll. Dieses Mundstück besteht in der Regel aus einem anderen Material als der Schild, da Schild und Mundstück unterschiedliche Eigenschaften aufweisen müssen. Trotzdem müssen diese Einzelteile fest miteinander verbunden werden, um ein Auseinanderfallen des Schnullers zu verhindern und den Benutzer davor zu schützen, die Einzelteile zu verschlucken.

Die Befestigung des Mundstückes im oder am Schild wird bevorzugt mit einem weiteren Bauteil in Form einer Nase bewerkstelligt. Üblicherweise wird das Mundstück zwischen Nase und Schild verklemmt, so dass eine feste Verbindung entsteht.

Die DE 101 21 490 A1 offenbart beispielsweise einen Schnuller bestehend aus einem Mundstück, einem Schild und einem Halteelement. Das Halteelement wird von der dem Mund abgewandten Seite in den Schild eingesetzt. Im Anschluss wird das Halteelement mit dem Schild verbunden. Eine Ultraschallschweissung wird von der dem Mund abgewandten Seite durchgeführt. Ungleiches Abschmelzen der einzelnen Bestandteile und ein hoher Anpressdruck während der Schweissung können zu unschönen Oberflächen führen und den Gesamteindruck trüben.

Es ist üblich, Schnuller beispielsweise mittels Tampondruckverfahren zu bedrucken. Oberflächen, die durch die Ultraschallschweissung unterschiedliche Strukturen aufweisen sind dabei hinderlich. Schäden, die an vorbedruckten Einzelteilen auftreten, werden häufig durch die Sonotrode verursacht.

Es ist Aufgabe der Erfindung, die Nachteile des Standes der Technik zu überwinden. Insbesondere soll ein Schnuller und ein Verfahren zu dessen Herstellung bereitgestellt werden, welche ohne störende Kontaktstellen auskommen. Weiter soll eine möglichst grosse bedruckbare Fläche am Schild erreicht werden. Eine weitere Aufgabe besteht darin, einen Schnuller zur Verfügung zu stellen, der eine möglichst kleine Nase aufweist.

Diese Aufgaben werden durch die in den unabhängigen Patentansprüchen definierten Verfahren und Vorrichtungen gelöst. Weitere Ausführungsformen ergeben sich aus den abhängigen Patentansprüchen.

Ein erfindungsgemässer Schnuller weist einen Schild, ein Mundstück und eine Nase auf, wobei die Nase und der Schild mit einer Ultraschallschweissung miteinander verbunden sind. Dabei ist das Mundstück zwischen Nase und Schild fixiert, insbesondere festgeklemmt. Der Schnuller weist eine im Wesentlichen zentrale Achse auf, welche durch den Schild, die Nase und das Mundstück verläuft. Der Schild umfasst eine erste und eine zweite Seite, wobei die erst Seite in bestimmungsgemässen Gebrauch dem Mund zugewandt ist. Die Nase und der Schild sind von der ersten Seite her ultraschallgeschweisst.

Eine Schweissung von der ersten Seite ermöglicht es, die Nase möglichst klein zu halten.

Ein erfindungsgemässer Schnuller umfasst ein Schild mit einer ersten Seite und einer zweiten Seite. In bestimmungsgemässem Gebrauch ist die erste Seite dem Mund zugewandt. Weiter umfasst der Schnuller ein Mundstück und eine Nase. Die Nase und der Schild sind mit einer Ultraschallschweissung miteinander verbunden und wirken derart zusammen, dass das Mundstück zwischen Nase und Schild fixiert ist. Bevorzugt ist das Mundstück zwischen Nase und Schild festgeklemmt. Der Schnuller weist eine im Wesentlichen zentrale Achse auf. Zentral bedeutet hier, dass die Achse durch alle Bauteile verläuft. Die zentrale Achse ist im Wesentlichen mit einer Längsachse des Mundstückes identisch. Der Schild weist mindestens eine Kontaktfläche auf um während der Schweissung die Energie von der Ultraschallschweisssonotrode aufzunehmen und an eine Schweissfläche zu übertragen. Auf dieser Kontaktfläche kann eine Ultraschallschweisssonotrode aufgesetzt werden. Die Kontaktfläche kann eine spezielle Geometrie zur Aufnahme der Ultraschallschweisssonotrode aufweisen. Die Kontaktfläche ist erfindungsgemäss auf der ersten Seite des Schildes, d.h. auf der bei bestimmungsgemässem Gebrauch dem Mund zugewandten Seite angeordnet. Die zweite Seite, die in bestimmungsgemässem Gebrauch sichtbar ist, bleibt somit unbeschädigt.

Dies ist von besonderem Vorteil, da somit der Schild, aber auch die Nase bereits während derer Fertigung bedruckt werden können. Die Einzelteile können entsprechend in einem weitaus höheren Masse vorfabriziert werden. Der Schnuller kann aber auch erst nach der Schweissung bedruckt werden, wofür sich die homogene und unbeschädigte Fläche besonders eignet. Insbesondere ist es auch möglich, die Nase mit einer geringeren Grösse zu fertigen, da keine Kontaktflächen für die Ultraschallschweisssonotrode auf der Nase zur Verfügung gestellt werden müssen. Für die Ultraschallschweissung werden die Einzelteile auf einem Amboss bereitgestellt und zwischen Amboss und Ultraschallschweisssonotrode angeordnet. Die Ultraschallschweisssonotrode ist der aktive, bzw. der arbeitende Teil, welcher die Ultraschall-Energie auf das zu schweissende Werkstück einbringt. Hingegen dient der Amboss als Werkstückaufnahme. Eine derartige Anordnung weist ausserdem den Vorteil auf, dass die Nase in einem weitaus breiteren Masse als im bekannten Stand der Technik gestaltet werden kann, z.B. mit Texturen, Profilierungen oder anderen Ausformungen wie Noppen, Rillen oder dreidimensionalen Elementen. Ausserdem ist deren Mindestgrösse nicht mehr von der Ultraschallschweisssonotrode abhängig, da an der Nase keine Kontaktflächen mehr erforderlich sind.

Die Kontaktfläche kann wenigstens teilweise umlaufend zu der zentralen Achse des Schnullers angeordnet sein. Es ist beispielsweise vorstellbar, dass die Kontaktfläche ringförmig oder oval ausgebildet ist. Ebenso ist es denkbar, dass die Kontaktfläche lediglich in einem Bogen um die zentrale Achse verläuft. Dies ermögliche eine zur zentralen Achse gleichmässige Schweissung sowie eine der Anatomie angepasste Form des Schnullers.

Die Kontaktfläche kann mehrere Teilflächen aufweisen. Es ist vorstellbar, dass einzelne Teilflächen derart verkleinert werden, dass ihre Ausdehnung weitestgehend nur noch kreis- oder punktförmig ist. Es versteht sich von selbst, dass auch eine punktförmige Teilfläche noch eine flächenmässige Ausdehnung aufweist, beispielsweise von mindestens 1 mm^2. So ist es möglich, die Ultraschallschweisssonotrode entsprechend auszubilden. Die Schweissung kann nun in einzelnen Schritten und von verschiedenen Seiten oder Richtungen ausgeführt werden. Dies ist insbesondere von Vorteil, wenn beispielsweise das Mundstück asymmetrisch ausgeführt wird und die Kontaktfläche in Richtung der zentralen Achse nicht allseitig zugänglich ist.

Bezüglich einer sich entlang der zentralen Achse erstreckenden Ebene können die Kontakt- oder Teilflächen im Wesentlichen symmetrisch angeordnet sein, wobei die einzelnen Teilflächen nicht zwingend von gleicher Gestalt sein müssen. Ausserdem können die Kontakt- oder Teilflächen um die zentrale Achse in etwa gleichmässig verteilt sein. Dies ermöglicht eine gleichmässige Fixierung der Nase im Schild.

Zwischen Nase und Schild kann der Schnuller eine, wenigstens teilweise um die zentrale Achse umlaufende Schweisszone aufweisen. Eine Schweisszone ist eine speziell ausgestaltete Zone, an welcher durch die Einwirkung von Ultraschall eine Schweissverbindung zwischen Nase und Schild entsteht beziehungsweise entstanden ist.

Für eine qualitativ hochwertige Schweissung weist die Schweisszone vor dem Ultraschallschweissen mindestens einen Energierichtungsgeber auf. Energierichtungsgeber sind in der Schweisszone an einem oder an beiden zu verbindenden Teilen angebrachte Erhebungen, die im Querschnitt beispielsweise eine dreieckige Kontur aufweisen können, die einen Winkel zwischen 60° und 90° aufweisen kann. Dies begünstigt die gezielte Einleitung der Energie. Es sind aber auch andere Querschnitte der Energierichtungsgeber vorstellbar. Die Energierichtungsgeber können sich sowohl an der Nase als auch am Schild befinden. Es ist auch vorstellbar, dass sie abwechslungsweise an Schild und Nase angeordnet sind. Vorzugsweise sind die Energierichtungsgeber an demjenigen Teil angeordnet, welcher während dem Ultraschallschweissen mit der Sonotrode in Kontakt tritt. Es versteht sich von selbst, dass beim fertigen Schnuller die Energierichtungsgeber in ihrer ursprünglichen Form nicht mehr vorhanden sind, da diese aufschmelzen und die Schweissverbindung mit dem Gegenstück gewährleisten.

Die Schweisszone kann in Richtung der zentralen Achse im Wesentlichen deckungsgleich zu der Kontaktfläche angeordnet sein. Dies gewährleistet ein effizientes und schonendes Aufschmelzen der Schweisszone sowie eine qualitativ hochwertige Verbindung der einzelnen Teile. Ausserdem wird dadurch eine zielgerichtete und direkte Energieübertragung zwischen der Kontaktfläche und der Schweisszone und ein gezieltes Aufschmelzen gefördert.

Die Kontaktfläche kann im Wesentlichen auf einer rechtwinklig zur zentralen Achse stehenden Ebene angeordnet sein. Dies begünstigt die Schweissung und lässt es zu, dass die zur Schweissung benötigte Ultraschallschweisssonotrode eine einfache geometrische Bauform aufweisen kann.

Die Kontaktfläche kann im Wesentlichen rechtwinklig zur zentralen Achse ausgerichtet sein. Eine derartig ausgerichtete Kontaktfläche begünstigt die Bauform der Ultraschallschweisssonotrode und ermöglicht eine gezielte Einbringung der Energie in die Schweisszone.

Die Kontaktfläche kann eine gekrümmte Kontur aufweisen und beispielsweise als kreisförmiger oder elliptischer Ring oder als Ringsegment ausgeführt sein. Es ist aber auch vorstellbar, dass sie in Richtung der zentralen Achse konkav oder konvex gewölbt ist. Dies ermöglicht eine dem Mund des Benutzers angepasste Formgebung.

Bevorzugt ist die Schweisszone derart angeordnet, dass sie einen im Wesentlichen gleichmässigen Abstand zu der Kontaktfläche aufweist. Dies ermöglicht eine gleichmässige Aufschmelzung der Schweisszone während des Ultraschallschweissens.

Die Nase des Schnullers kann auf der dem Mundstück abgewandten Seite Aufnahmemittel zum Anbringen eines Befestigungsmittels aufweisen. Solche Befestigungsmittel sind beispielsweise ein Ring und/oder ein Bändel und/oder eine Kette zur besseren Handhabung oder zum Schutz vor Verlust.

Bevorzugt umfasst das Aufnahmemittel mindestens eine Aussparung, insbesondere eine die Nase durchdringende Aussparung. Ein Bändel oder eine Kette kann mit einem ersten Ende direkt eingeführt und befestigt werden. Das zweite Ende kann beispielsweise mit einem Schnapp- oder Klemmmechanismus oder einem Magnethalter beispielsweise an einem Kleidungsstück des Benutzers befestigt werden.

Das Mundstück kann einen Befestigungsbereich aufweisen, welcher sich in radialer Richtung zur zentralen Achse verdickt und im Wesentlichen mindestens einen teilweise umlaufenden Rand bildet. Ein derartiger Rand sorgt für Stabilität und vereinfacht ein Befestigen des Mundstücks, wenn es in eine entsprechende Öffnung des Schildes eingebracht wird.

Das Mundstück kann mit einem Befestigungsbereich zwischen einer, sich im Wesentlichen in Richtung der zentralen Achse erstreckenden Fläche der Nase und einer zu dieser Fläche im Wesentlichen gleichmässig beabstandeten Fläche des Schildes festgeklemmt sein. Es ist aber auch vorstellbar, dass das Mundstück zusätzlich oder alternativ zwischen einer sich im Wesentlichen rechtwinklig zur zentralen Achse erstreckenden Fläche der Nase und einer zu dieser Fläche im Wesentlichen gleichmässig beabstandeten Fläche des Schildes festgeklemmt ist. Dies ermöglicht eine besonders einfache und sichere Befestigung des Mundstückes.

Ein weiterer Aspekt der Erfindung betrifft ein Verfahren zum Herstellen eines Schnullers, insbesondere eines Schnullers wie vorliegend beschrieben. Das erfindungsgemässe Verfahren umfasst die Schritte:
- Bereitstellen eines Schildes mit einer ersten Seite und einer zweiten Seite, wobei die erste Seite im bestimmungsgemässen Gebrauch dem Mund zugewandt ist,
- Bereitstellen eines Mundstückes,
- Bereitstellen einer Nase,
- Verbinden der Nase mit dem Schild mit einer Ultraschallschweissung, derart, dass das Mundstück zwischen Nase und Schild fixiert, insbesondere festgeklemmt wird.

Dabei wird zur Ultraschallschweissung eine Ultraschallschweisssonotrode auf einer Kontaktfläche zum Ansetzen einer Ultraschallschweisssonotrode auf der ersten Seite des Schildes aufgebracht. Eine derartige Schweissung stellt eine nicht lösbare Verbindung zur Verfügung. Durch das mundseitig ausgeführte Verfahren wird die bei Benutzung des Schnullers sichtbare Oberfläche nicht mehr beansprucht. Es ist somit möglich, die Einzelteile in einem höheren Masse vorzufertigen. Insbesondere können die Teile schon vor dem fertigen Zusammenbau, also vor dem Ultraschallschweissen, bedruckt werden. Es ist auch möglich, die vollständige, dem Mund abgewandte Seite des Schnullers zu bedrucken oder mit einer Textur zu versehen. Insbesondere muss auf der Nase keine Kontaktfläche mehr zur Verfügung gestellt werden. Dies ermöglicht einen grösseren Gestaltungsspielraum für die Nase. Ausserdem ist die Mindestgrösse der Nase nicht mehr von der Ultraschallschweissonotrode abhängig. Durch eine kleinere Nase kann die Oberfläche des Schildes maximiert werden.

Zum Anfügen des Mundstücks an den Schild kann das Mundstück sowohl von der ersten Seite des Schildes in eine Öffnung des Schildes gezogen werden, als auch von der zweiten Seite des Schildes in eine Öffnung des Schildes gedrückt werden. Beim Durchziehen des Mundstückes von der dem Mund zugewandten Seite wird das Mundstück geschont, da der Lutschbereich nicht berührt wird. Wird das Mundstück von der dem Mund abgewandten Seite durch den Schild gestossen, kann der Schild für alle Verfahrensschritte in einer einzigen Position auf der Ultraschallschweisssonotrode fixiert werden, so dass gegebenenfalls eine einfache Fertigung ermöglicht wird.

Es wäre durchaus vorstellbar, die Ultraschallschweissung in mehreren Schritten durchzuführen. In einem derartigen Verfahren, beispielsweise vorstellbar für Applikationen, die in ihrer Ausdehnung die Abmessungen eines Schnullers übertreffen, kann in einem ersten Schritt die Sonotrode in einem ersten Teilbereich auf die Kontaktfläche aufgebracht und die Schweissung durchgeführt werden. In mindestens einem weiteren Schritt kann die Sonotrode in einem weiteren Teilbereich auf die Kontaktfläche aufgebracht und die Schweissung durchgeführt werden. Dabei wird jeweils derjenige Bereich einer Schweisszone aufgeschmolzen, welcher in Richtung der zentralen Achse unter der Ultraschallschweisssonotrode liegt und somit entsprechend mit dem Gegenstück verbunden. Diese Schritte können selbstverständlich mehrfach ausgeführt werden. Somit ist es nicht nötig, dass mit einer Ultraschallschweisssonotrode die komplette Kontaktfläche auf ein Mal beaufschlagt wird, sondern es genügt, die Schweissung mit einer kleineren Ultraschallschweisssonotrode auszuführen und das Werkstück beispielsweise in die richtige Position für die nächste Schweissung zu positionieren.

Bevorzugt werden die einzelnen Schritte der Ultraschallschweissung gleichzeitig ausgeführt. Hierzu ist es denkbar, wenn mehrere Sonotroden im Einsatz sind. Dies verkürzt die Bearbeitungszeit. Ausserdem ist die Kombination der einzelnen Schritte denkbar. Hierzu kann die Schweissung mit einer einzelnen, der Form der Kontaktfläche angepassten Ultraschallschweisssonotrode ausgeführt werden. Eine solche Schweissung mit einer einzelnen Sonotrode gewährleistet eine gleichmässige Schweissung.

Anhand von Figuren, welche lediglich Ausführungsbeispiele darstellen, wird die Erfindung im Folgenden näher erläutert. Es zeigen:
- Figur 1:: eine perspektivische Ansichte einer ersten Ausführungsform eines erfindungsgemässen Schnullers,
- Figur 1b:: eine perspektivische Ansichte einer zweiten Ausführungsform eines erfindungsgemässen Schnullers,
- Figur 2:: eine Frontansicht des Schnullers aus Figur 1a,
- Figur 3:: einen Schnitt entlang der Linie B-B durch den Schnuller gemäss Figur 2,
- Figur 4:: eine Frontansicht eines Schildes eines erfindungsgemässen Schnullers,
- Figur 5:: einen Schnitt entlang der Linie C-C durch den Schild gemäss Figur 4,

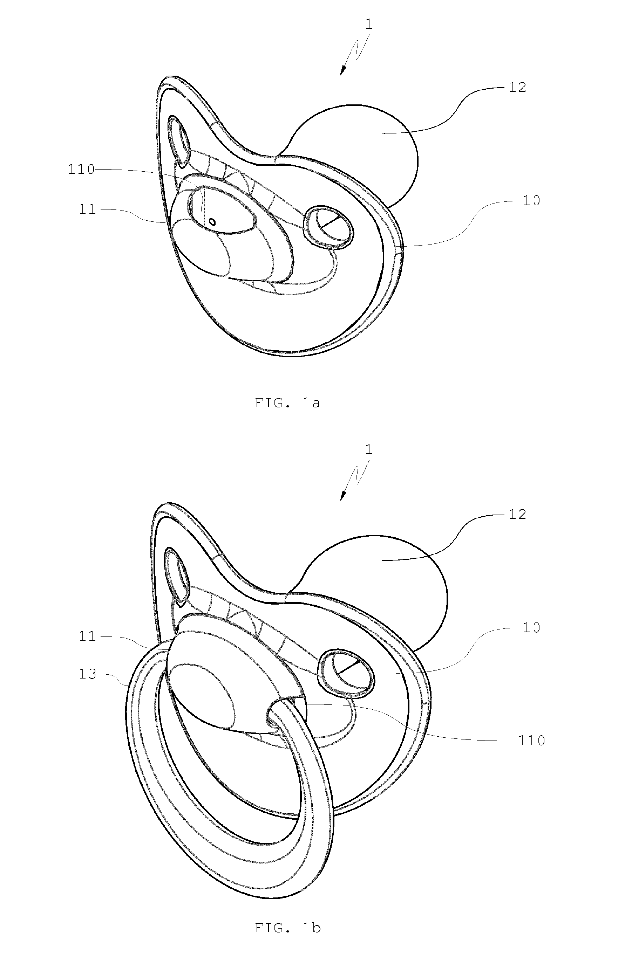

Figur 1a zeigt eine perspektivische Ansicht einer ersten Ausführungsform eines erfindungsgemässen Schnullers 1. Der Schnuller 1 umfasst einen Schild 10, eine Nase 11 und ein Mundstück 12. In der Nase ist ein Aufnahmemittel zur Aufnahme einer Kette vorgesehen, welches als durchgehende Öffnung 110 ausgestaltet ist. Im Schild 10 des Schnullers 1 sind zwei Öffnungen vorgesehen, die die Luftzufuhr weiter ermöglichen, falls der Schnuller 1 verschluckt wird oder in die Atemwege gelangt. Der Schild weist einen Rand auf welcher vorliegend aus einem anderen Material als der Schild besteht. Der Schild ist beispielsweise in einem 2-Komponenten-Spritzgussverfahren gefertigt.

Figur 1b zeigt eine perspektivische Ansicht einer weiteren Ausführungsform eines erfindungsgemässen Schnullers 1. Im Unterschied zur Ausführungsform aus Figur 1a ist das Aufnahmemittel derart ausgeführt und gestaltet, dass ein Ring 13 aufgenommen werden kann. Der Ring 13 ist im Aufnahmemittel, welches vorliegend durch zwei Aussparungen 110 gebildet wird, zwischen der Nase 11 und dem Schild 10 befestigt und drehbar gelagert. Es ist aber auch vorstellbar, dass der Ring 13 die Nase 11 vollständig durchdringt und entsprechend eine durchgehende Öffnung analog zu Figur 1a vorhanden ist.

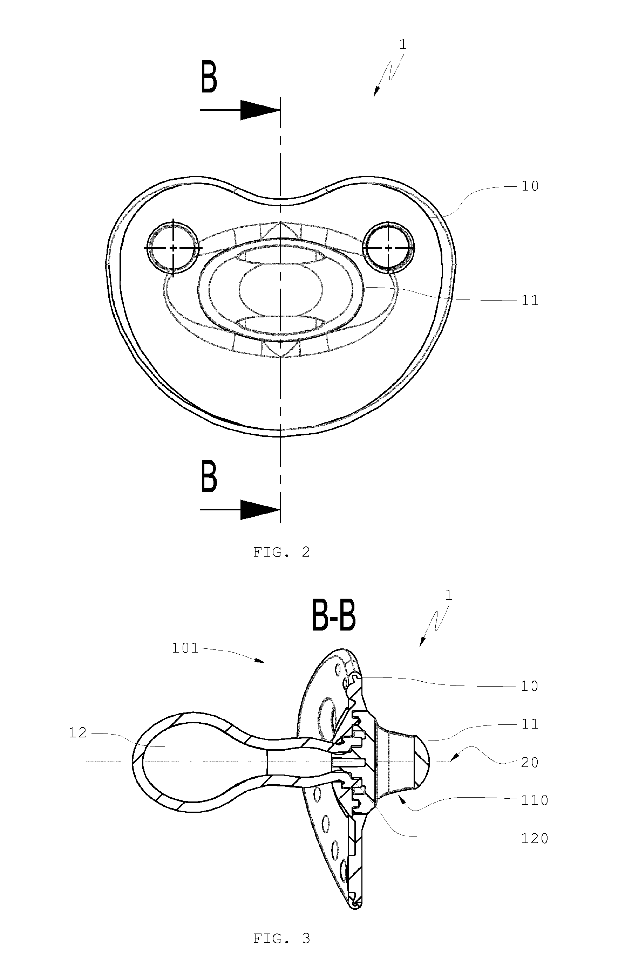

Figur 2 zeigt eine Frontansicht des Schnullers 1 aus Figur 1a. Die Nase 11 und der Schild 10 sind ohne nennenswerte Spalten miteinander verbunden. Zum Bedrucken oder zur Gestaltung steht die vollständige, dem Betrachter zugewandte Fläche des Schildes und der Nase zur Verfügung. Bespielsweise ist es auch vorstellbar, dass diese Oberfläche mit einer Textur versehen ist um sowohl Aussehen als auch Haptik zu beinflussen. Der Schild 10 weist eine radiale Einbuchtung auf, so dass im bestimmungsgemässen Gebrauch die Nase des Benutzers freigestellt ist.

Figur 3 zeigt einen Schnitt entlang der Linie B-B durch den Schnuller 1 gemäss Figur 2. Der Schild 10, die Nase 11 und das Mundstück 12 sind ineinander gefügt, wobei der Schild 10 und die Nase 11 mittels Ultraschallschweissung miteinander verbunden sind. Das Mundstück 12 ist sowohl in Richtung einer zentralen Achse 20 als auch quer zur Achse 20 mit einem verdickten Rand 120 zwischen Schild 10 und Nase 11 festgeklemmt. Der verdickte Rand 120 ist umlaufend zur zentralen Achse 20 ausgebildet und ist im Wesentlichen in radialer Richtung von der Wandung des Mundstückes weg verdickt. Der Schild 10 weist auf der ersten Seite 101 Noppen auf. Dies begünstigt sowohl den Speichelabfluss als auch die Belüftung der Haut, auf der der Schnuller 1 bei bestimmungsgemässem Gebrauch aufliegt und schützt somit vor Reizungen. Vorliegend ist der Schild 10 aus zwei Komponenten gefertigt. Es ist aber auch vorstellbar, dass der Schild nur aus einer Komponente oder aus mehr als zwei Komponenten gefertigt wird. Das Aufnahmemittel an der Nase 11 ist als durchgehende Öffnung 110 gestaltet.

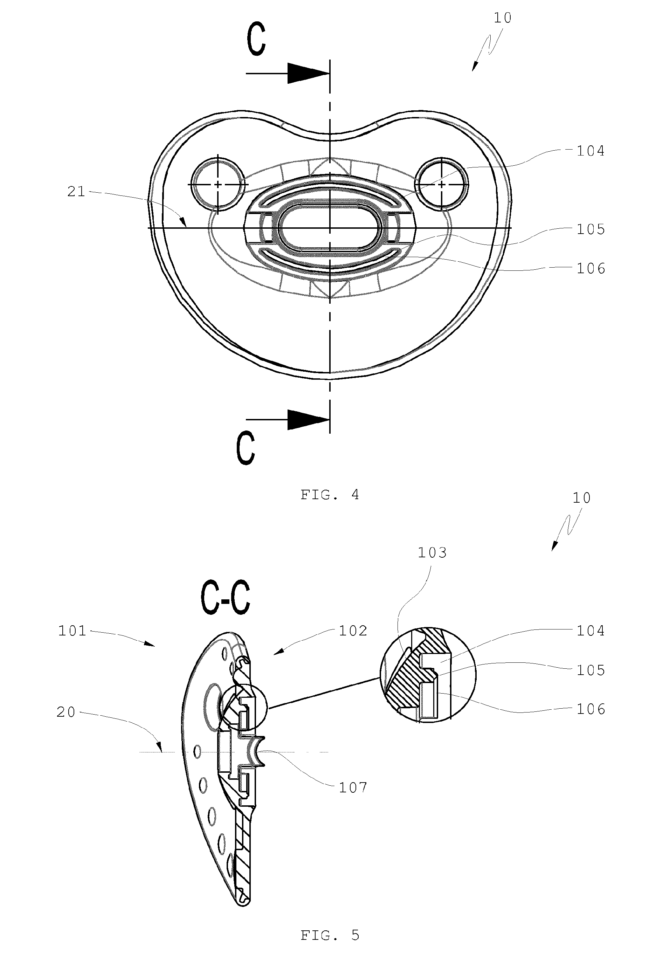

Figur 4 zeigt eine Frontansicht eines Schildes 10. Eine Schweisszone 104 ist aus zwei ovalen Abschnitten eines Ringes gebildet, die symmetrisch zu einer Ebene 21 angeordnet sind. In der Schweisszonen 104 befindet sich die Schweissfläche 105 mit Energierichtungsgebern 106. Mittig im Schild 10 ist eine Öffnung vorgesehen, die zur Aufnahme des Mundstückes 12 und der Nase 11 (siehe Figur 3) dient. Im Schild 10 befinden sich zwei Öffnungen. Sie dienen zur Sicherheit, falls der Schnuller in den Mundraum oder in den Rachen des Benutzers fällt und stellen sicher, dass die Atmung nicht gänzlich verhindert wird. Der Schild 10 weist in einem Bereich eine radiale Einbuchtung auf, die im bestimmungsgemässen Gebrauch zur Freistellung der Nase benötigt wird.

Figur 5 zeigt einen Schnitt entlang der Linie C-C durch den Schild 10 gemäss Figur 4, sowie eine Detailansicht des Schnittes. In dieser Schnittansicht ist die erste Seite 101, die dem Mund des Benutzers zugewandt ist, sowie die zweite Seite 102 erkennbar. Die Detailansicht zeigt die Schweisszone 104 mit einer zur zentralen Achse 20 rechtwinklig angeordneten Schweissfläche 105, welche einen Energierichtungsgeber 106 aufweist. Der Energierichtungsgeber 106 hat eine im Querschnitt dreieckige Form und schliesst einen Winkel von ca. 90° ein. Vorliegend ist die Schweisszone 104 mit einer separaten Schweissfläche 105 ausgestattet, welche den Energierichtungsgeber 106 beinhaltet. Eine derartig separat ausgebildete Schweissfläche 105 ist nicht notwendig, begünstigt jedoch die Schweissung. Ausserdem kann eine klare Aussage über die Grösse und Form der Schweissung gemacht werden. Die Schweisszone 104 ist in Richtung der zentralen Achse 20 im Wesentlichen deckungsgleich zu einer Kontaktfläche 103 angeordnet. Die Kontaktfläche 103 steht hier unter einem Winkel von weniger als 90° zur zentralen Achse 20. Im Bereich der zentralen Öffnung des Schildes 10 sind gekrümmte Konturen 107 ersichtlich, die im Zusammenwirken mit den Aufnahmemitteln 110 der Nase 11 (vgl. Figur 1b) beispielsweise einen Ring aufnehmen können. Die entsprechende Nase weist eine weitgehend komplementäre Form zu der Form des Schildes 10 auf. Es ist jedoch vorstellbar, dass sich die Schweissfläche 105 mit dem Energierichtungsgeber 106 auf der Nase befindet.

## Patentansprüche

1. Schnuller (1), umfassend
einen Schild (10) mit einer ersten Seite (101) und einer zweiten Seite (102), wobei die erste Seite (101) in bestimmungsgemässem Gebrauch dem Mund zugewandt ist,
ein Mundstück (12)
und eine Nase (11),
wobei die Nase (11) und der Schild (10) mit einer Ultraschallschweissung miteinander verbunden sind und derart zusammenwirken, dass das Mundstück (12) zwischen Nase (11) und Schild (10) fixiert, insbesondere festgeklemmt ist, wobei der Schnuller (1) eine im Wesentlichen zentrale Achse (20) aufweist
und wobei der Schild (10) mindestens eine Kontaktfläche (103) zum Ansetzen einer Ultraschallschweisssonotrode (14) aufweist,
**dadurch gekennzeichnet, dass,**
die Kontaktfläche (103) zum Ansetzen der Ultraschallschweisssonotrode (14) auf der ersten Seite (101) des Schildes (10) angeordnet ist.

2. Schnuller (1) nach Anspruch 1,
**dadurch gekennzeichnet, dass**
die Kontaktfläche (103) wenigstens teilweise umlaufend um die zentrale Achse (20) des Schnullers (1) angeordnet ist.

3. Schnuller (1) nach einem der Ansprüche 1 bis 2,
**dadurch gekennzeichnet, dass**
der Schnuller (1) zwischen Nase (11) und Schild (10) eine, wenigstens teilweise um die zentralen Achse (20) umlaufende, Schweisszone (104) aufweist.

4. Schnuller (1) nach Anspruch 3,
**dadurch gekennzeichnet, dass**
die Schweisszone (104) in Richtung der zentralen Achse (20) im Wesentlichen deckungsgleich zu der Kontaktfläche (103) angeordnet ist.

5. Schnuller (1) nach einem der Ansprüche 1 bis 4,
**dadurch gekennzeichnet, dass**
das die Kontaktfläche (103) im Wesentlichen rechtwinklig zur zentralen Achse (20) ausgerichtet ist.

6. Schnuller (1) nach einem der Ansprüche 1 bis 5,
**dadurch gekennzeichnet, dass**
das die Kontaktfläche (103) eine gekrümmte, insbesondere eine im Wesentlichen elliptische, Kontur aufweist.

7. Schnuller (1) nach einem der Ansprüche 1 bis 6,
**dadurch gekennzeichnet, dass**
das Mundstück (12) einen Befestigungsbereich, insbesondere einen sich in radialer Richtung zur zentralen Achse (20) verdickten, im Wesentlichen mindestens teilweise umlaufenden, Rand (120) aufweist.

8. Schnuller (1) nach einem der Ansprüche 1 bis 7,
**dadurch gekennzeichnet, dass**
das Mundstück (12) mit einem Befestigungsbereich zwischen einer, sich im Wesentlichen in Richtung der zentralen Achse (20) erstreckenden Fläche der Nase (11) und einer zu dieser Fläche im Wesentlichen gleichmässig beabstandeten Fläche des Schildes (10) und/oder zwischen einer sich im Wesentlichen rechtwinklig zur zentralen Achse erstreckenden Fläche der Nase (11) und einer zu dieser Fläche im Wesentlichen gleichmässig beabstandeten Fläche des Schildes (10) festgeklemmt ist.

9. Verfahren zum Herstellen eines Schnullers (1), insbesondere eines Schnullers (1) nach einem der Ansprüche 1 bis 8, umfassend die Schritte
- Bereitstellen eines Schildes (10) mit einer ersten Seite (101) und einer zweiten Seite (102), wobei die erste Seite (101) im bestimmungsgemässen Gebrauch dem Mund zugewandt ist
- Bereitstellen eines Mundstückes (12)
- Bereitstellen einer Nase (11)
- Verbinden der Nase (11) mit dem Schild (10) mit einer Ultraschallschweissung, derart, dass das Mundstück (12) zwischen Nase (11) und Schild (10) fixiert, insbesondere festgeklemmt wird,
**dadurch gekennzeichnet, dass**
zur Ultraschallschweissung eine Ultraschallschweisssonotrode (14) auf der ersten Seite (101) des Schildes (10) aufgebracht wird.

10. Verfahren nach Anspruch 9,
**dadurch gekennzeichnet, dass**
das Mundstück (12) zum Anfügen an den Schild (10) von der ersten Seite (101) des Schildes (10) in eine Öffnung des Schildes (10) gezogen wird.

11. Verfahren nach Anspruch 10,
**dadurch gekennzeichnet, dass**
das Mundstück (12) zum Anfügen an den Schild (10) von der zweiten Seite (102) des Schildes (10) in eine Öffnung des Schildes (10) gedrückt wird.

12. Verfahren nach einem der Ansprüche 9 bis 11,
**dadurch gekennzeichnet, dass**
die Ultraschallschweissung in einem ersten Schritt in einem ersten Teilbereich stattfindet und in mindestens einem weiteren Schritt in einem weiteren Teilbereich stattfindet.

13. Verfahren nach Anspruch 12,
**dadurch gekennzeichnet, dass**
die einzelnen Schritte der Ultraschallschweissung gleichzeitig, insbesondere kombiniert, stattfinden.
